# EUROPÄISCHE PATENTSCHRIFT

(11) **EP 2 594 083 B1**
(45) Veröffentlichungstag und Bekanntmachung des Hinweises auf die Patenterteilung: **27.09.2017**
(21) Anmeldenummer: 11739001.3
(22) Anmeldetag: 30.06.2011
(51) Int. Cl.: H04Q 9/00, A01B 79/00

(54) **SYSTEM ZUR KONTROLLE EINER ARBEITSMASCHINE**
SYSTEM FOR CONTROLLING A WORK MACHINE
SYSTÈME DE CONTRÔLE D'UNE MACHINE DE TRAVAIL

(30) Priorität: 14.07.2010 DE 102010031344
(43) Veröffentlichungstag der Anmeldung: 22.05.2013
(73) Patentinhaber: Deere & Company, Moline, IL 61265 (US)
(72) Erfinder: BLANK, Sebastian, 67655 Kaiserslautern (DE)
(74) Vertreter: Holst, Sönke
(86) Internationale Anmeldenummer: PCT/EP2011/061064
(87) Internationale Veröffentlichungsnummer: WO 2012/007292

(56) Entgegenhaltungen:
- EP-A2- 0 192 120
- WO-A1-01/13558
- GB-A- 2 447 731
- US-B1- 7 581 434

## Beschreibung

Die Erfindung betrifft ein System und ein Verfahren zur Kontrolle einer Arbeitsmaschine.

### Stand der Technik

Eingebettete Systeme zur Kontrolle von Arbeitsmaschinen sind per Definitionem solche, die in die ihre Anwendung betreffende Umwelt im hohen Maße eingebunden sind. Diese Ausgabenstellung beinhaltet einen zentralen Kernaspekt: Das System muss über Wege verfügen, die betreffenden Umweltparameter (Zustandsgrößen) zu erfassen, um dann im Gegenzug eine gewünschte Reaktion einzuleiten. Hierzu werden Sensoranordnungen verwendet, welche eine spezielle Größe messen und direkt oder indirekt in ein elektrisch verwertbares Signal umwandeln.

Um nun in der Lage zu sein, diese erfassten Größen sinnvoll miteinander zu kombinieren oder zu vergleichen, ist es essentiell diese in ein einheitliches Darstellungsformat zu überführen. Dies ist nötig, da die Sensoranordnungen verschiedene Ausgangsgrößen, Maßeinheiten und Skalierungsformate aufweisen. Ein gutes Beispiel hierfür ist die Fahrzeuggeschwindigkeit. Diese kann am Sensorausgang als Spannung, Widerstand, Impulse pro Zeiteinheit oder auch als digitaler Wert darstellt werden. Weiterhin werden (je nach Sensortyp und Hersteller) verschiedene andere Maßeinheiten bzw. Skalierungen wie z.B. km/h, m/s, mph o.Ä. oder ein statischer Bias verwendet. Auch sind verschiedene Arten der Informationsabbildung (z.B. Amplituden- bzw. Frequenzmodulation) gebräuchlich.

Eine Überführung von Messwerten unterschiedlicher Sensoren in ein einheitliches Darstellungsformat ist insbesondere im Rahmen von Sensorfusionsansätzen unerlässlich. Bei der Fusion werden die Ausgangswerte möglichst viele vorhandener Sensoren, welche dieselbe physikalische Größe (idealerweise mit Hilfe verschiedener Messprinzipien) abbilden, mathematisch kombiniert, um die Genauigkeit und Zuverlässigkeit der Messung über den Grad der Leistungsfähigkeit eines einzelnen Sensors hinaus zu erhöhen.

In bisherigen Systemen muss hierzu zu jedem Sensor das Wissen über die Informationsdarstellung mit den o.g. Parametern explizit lokal im System vorliegen. In der Regel bedeutet dies, dass zur Entwicklungszeit von einer fixen Sensorkonfiguration des Systems ausgegangen wird, für die die benötigte Information fest vorgegeben wird. Ein typisches Beispiel für einen solchen statischen Vorgang ist z.B. in der Veröffentlichung

HOSEINNEZHAD et al., "Fusion of Redundant Information in Brake-By-Wire Systems Using a Fuzzy Voter", JOURNAL OF ADVANCES IN INFORMATION FUSION VOL. 1, NO. 1 JULY 2006 zu sehen. Andere Systeme mit einer Fusion von Sensordaten an landwirtschaftlichen Arbeitsmaschinen mit lokal vorgehaltenen Daten über die Informationsdarstellung der jeweiligen Sensoren finden sich in EP 2 020 168 A1 und EP 2 169 499 A2.

Die US 7 581 434 B1 beschreibt eine Anordnung zur Zustandserkennung eines Gerätes oder einer Flüssigkeit, die Messwerte unterschiedlicher Sensoren verschmilzt. In der GB 2 447 731 A wird ein Kommunikationssystem für ein Fahrzeug beschrieben, bei dem Daten drahtlos und in einem Standardformat auf das Fahrzeug übertragen werden.

In der EP 0 192 120 A2 wird ein Stromleitungsnetzwerk beschrieben, bei dem in Unterstationen Meldungskonzentratoren vorhanden sind, denen von Prozessmodulen elektrische Messwerte (Strom, Spannung etc.) der Unterstation zugeführt werden. Im Meldungskonzentrator werden bei der Inbetriebnahme der Anlage parametrierbare Listen hinterlegt, welche den Einzelklemmen der Prozessmodulen Meldungsnummern zuordnen. In einer höher geordneten Station werden die Messwerte anhand der Meldungsnummern identifiziert. Die Messwerte werden in SI-Einheiten übertragen und die physikalische Dimension wird mit übersandt.

### Aufgabenstellung

Der entscheidende Nachteil des Ansatzes, bei dem zu jedem Sensor das Wissen über die Informationsdarstellung mit den o.g. Parametern explizit lokal im System vorliegen muss, ist die Unfähigkeit zur dynamischen Erweiterung der Informationsquellen zur Laufzeit, da hierzu das benötigte Wissen lokal nicht zugänglich ist. Daher können die betreffenden Sensoren nicht in den Entscheidungsprozess des Systems einbezogen werden, was im Allgemeinen eine geringe Genauigkeit und Zuverlässigkeit des Ergebnisses zur Folge hat.

Dies ist im speziellen im Bereich der landwirtschaftlichen Nutzfahrzeugtechnik ein entscheidender Nachteil, da so z.B. Informationsquellen, welche ein Arbeits- oder Anbaugerät zur Verfügung stellt üblicherweise nicht genutzt werden können. Dies ist in diesem speziellen Fall besonders nachteilig, da diese Sensoren oftmals viel gerichteter als die an Bord eines Schleppers verfügbaren Sensoren auf den konkreten Anwendungsfall zugeschnitten sind.

Die der Erfindung zu Grunde liegende Aufgabe wird darin gesehen, die erwähnten Nachteile zu vermeiden oder zu vermindern.

### Lösung

Diese Aufgabe wird erfindungsgemäß durch die Lehre der Patentansprüche 1 und 7 gelöst, wobei in den weiteren Patentansprüchen Merkmale aufgeführt sind, die die Lösung in vorteilhafter Weise weiterentwickeln.

Das im Folgenden vorgestellte System und Verfahren ermöglicht es, bei einer insbesondere landwirtschaftlichen Arbeitsmaschine die Angleichung der vorhandenen Informationen der Sensoranordnungen auf ein einheitliches Format für statische ebenso wie für dynamisch veränderliche Sensorkonfigurationen des Systems ohne explizites lokales Vorwissen vorzunehmen. Die hierzu benötigten Formatierungsdaten werden zur Laufzeit über ein Datenübertragungsnetzwerk bezogen, das Sensoranordnungen mit einer Prozessoreinheit verbindet, welche die Angleichung und Verschmelzung der Messwerte der jeweils gleichartigen oder unterschiedlichen Sensoranordnungen vornimmt. Hierfür ist ein systemweit eindeutiges Erkennungsmerkmal in Form einer Identifikationsnummer der Sensoranordnung bekannt. Die eigentlichen Formatierungsdaten können sowohl lokal als auch dezentral im Datenübertragungsnetzwerk abgelegt werden. Dort sind sie dann im Bedarfsfall zugänglich, um über das Datenübertragungsnetzwerk übermittelte Sensormesswerte in ein einheitliches und vergleichbares Format zu überführen.

Bevor die ankommenden Sensoranordnungs-Rohdaten aufbereitet werden können, müssen die Formatierungsdaten, die benötigt werden, um die Werte der Sensoranordnung in Daten zu überführen, die mit Daten anderer Sensoranordnungen verglichen werden können, dem System zugänglich gemacht werden. Hierzu wird am Anfang bzw. nach dem Anschließen eines Arbeitsgeräts an die Arbeitsmaschine einmalig von jeder Sensoranordnung eine Identifikationsnummer übertragen, die es dem System erlaubt, die Sensoranordnung eindeutig zuzuordnen. Auf Grund dieser Identifikationsnummer fragt die Prozessoreinheit nun ab, ob lokal Wissen vorhanden ist (d.h. das System die Sensoranordnung bereits kennt). Dann werden die Formatierungsdaten beispielsweise aus einer Speichereinheit der Sensoranordnung oder einer separaten Speichereinheit abgerufen. Ist dies nicht der Fall so werden die entsprechenden Daten über ein drahtloses Datenübertragungsnetzwerk dezentral beschafft, das eine Verbindung mit externen Rechnern bereitstellt. Ein geeignetes Beispiel ist ein Datenübertragungsnetzwerk, das es Dienstanbietern) erlaubt, Daten auszutauschen. Verfügt also bereits irgendein Teilnehmer (z.B. ein anderer Traktor oder ein Server des Geräteherstellers) über die benötigten Informationen, können diese allen anderen am Datenübertragungsnetzwerk angeschlossenen Einheiten zur Verfügung gestellt werden.

Die Informationsvorhaltung geschieht in geordneter Form. Die essentiellen Bestandteile einer Dateneinheit der Formatierungsdaten können sein:
Eine Identifikationsnummer, welche die eindeutige Zuordnung zur entsprechenden Sensoranordnung erlaubt
Die physikalischen Größe(n) welche durch die Sensoranordnung gemessen werden (z.B. Temperatur oder mechanische Kräfte)
Maßeinheit, Skalierungsfaktoren, Nullversatz (Bias) des Messwertes
Angaben zur Informationscodierung
Abhängigkeiten von intrinsischen Parametern (z.B. Raddurchmesser bei einem Raddrehzahlsensor zur Berechnung der Geschwindigkeit)
Weitere optionale Informationen wie z.B. eine Qualitätsmetrik, Messbereich usw.

Hierfür eignen sich Datensätze im XML-Format in idealer Weise, da sie es erlauben die benötigten Inhalte in kompakter, strukturierter und leicht zugänglicher Form abzulegen und auszutauschen. Weiterhin sind aber auch andere Datenformate denkbar.

Der vorgestellte Ansatz erlaubt es, sich dynamisch auf neue (dem lokalen System unbekannte) Datenerfassungsquellen einzustellen. Dadurch wird es möglich, alle im Gesamtsystem vorhandenen Sensoranordnungen dem System nutzbar zu machen. Dies stellt speziell im Bereich der Landmaschinen einen entscheidenden Vorteil dar, da dieses Vorgehen z.B. durch Nutzung der Sensorik des Arbeitsgerätes eine höhere Genauigkeit der Erfassung der physikalischen Messgrößen erlaubt. Weiterhin lässt sich hierdurch auch die Anzahl der Sensoranordnungen im Gesamtsystem reduzieren (da Sensoren nur einmal vorhanden sein müssen, anstatt diese z.B. doppelt in Traktor und Arbeitsgerät vorzuhalten zu müssen). Hierdurch lassen sich Kosten einsparen. Andere Datenkombinationsansätze erlauben auf Grund dieser erweiterten Datengrundlage, auf bisher unzugängliche Messgrößen zu schließen. Die Formatierungsdaten können werksseitig abgespeichert sein oder im Betrieb der jeweiligen oder einer anderen Arbeitsmaschine erlernt werden.

Der von der Prozessoreinheit bereitgestellte, kombinierte Messwert kann insbesondere dazu dienen, Aktoren einer Arbeitsmaschine und/oder eines Arbeitsgeräts anzusteuern.

### Ausführungsbeispiel

In der Zeichnung ist ein nachfolgend näher beschriebenes Ausführungsbeispiel der Erfindung dargestellt. Es zeigt:
- Fig. 1: eine seitliche Ansicht einer landwirtschaftlichen Arbeitsmaschine mit einem Arbeitsgerät,
- Fig. 2: ein schematisches Diagramm eines erfindungsgemäßen Systems zur Kontrolle der Arbeitsmaschine, und
- Fig. 3: ein Flussdiagramm, nach dem das System zur Kontrolle der Arbeitsmaschine arbeitet.

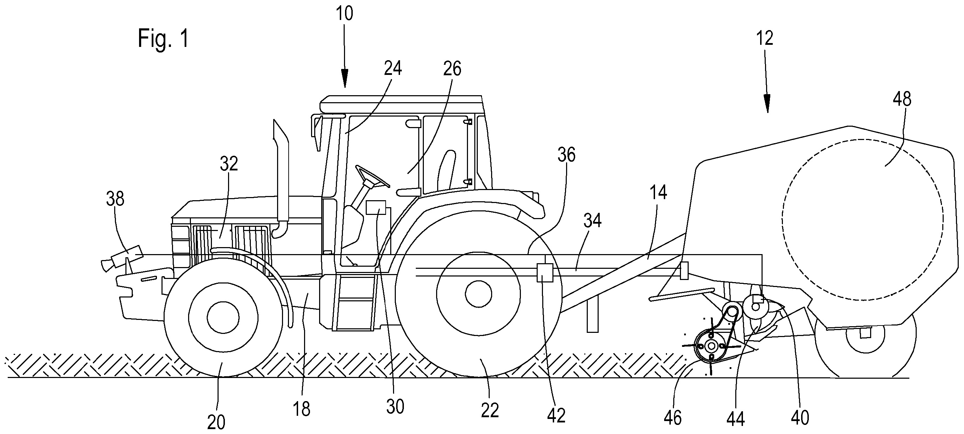

Die Figur 1 zeigt eine seitliche Ansicht einer landwirtschaftlichen Arbeitsmaschine 10 in Form eines Traktors und eines mittels einer Deichsel 14 an eine Anhängekupplung (nicht gezeigt) der Arbeitsmaschine 10 gekoppelten, an sich bekannten (s. EP 0 316 506 A1) Arbeitsgeräts 12 in Form einer Rundballenpresse mit konstanter oder variabler Presskammergröße. Die Arbeitsmaschine 10 baut sich auf einem tragenden Rahmen 18 auf, der sich auf lenkbaren Vorderrädern 20 und antreibbaren Hinterrädern 22 abstützt und eine Kabine 24 trägt, in der sich ein Bedienerarbeitsplatz 26 befindet.

Die Arbeitsmaschine 10 umfasst eine Steuereinheit 30, die zur Kontrolle der Vortriebsgeschwindigkeit der Arbeitsmaschine 10 dient und das Übersetzungsverhältnis eines durch einen Verbrennungsmotor 32 angetriebenen Getriebes (nicht gezeigt) zum Antrieb der Hinterräder 22 steuert. Dabei bleiben die Drehzahl des Verbrennungsmotors 32 und die in Stufen auswählbare Drehzahl einer Zapfwelle 34 zum Antrieb der angetriebenen Elemente des Arbeitsgeräts 12 zumindest näherungsweise konstant. Zum Aufbau und zur Kontrolle des Antriebs der Arbeitsmaschine 10 und des Arbeitsgeräts 12 sei auf die Offenbarung der DE 10 2005 029 405 A1 verwiesen, die durch Verweis mit in die vorliegenden Unterlagen aufgenommen wird.

Die Steuereinheit 30 ist über ein Datenübertragungsnetzwerk 36 in Form eines Busses mit verschiedenen Sensoranordnungen 38, 40, 42 verbunden. Eine erste Sensoranordnung 38 umfasst eine Kamera, die auf das Schwad vor der Arbeitsmaschine 10 blickt und ein Bildverarbeitungssystem 52, das aus dem Bild der Kamera das Querschnittvolumen des Schwads ableitet. Eine zweite Sensoranordnung 40 ist an Bord des Arbeitsgeräts 12 angeordnet und erfasst das Antriebsdrehmoment eines Rotors 44, der Erntegut stromab eines Aufnehmers 46 in eine Ballenbildungskammer 48 fördert. Eine dritte Sensoranordnung 42 befindet sich an Bord der Arbeitsmaschine 10 und erfasst das Antriebsmoment der Zapfwelle 34. Die Steuereinheit 30 kontrolliert ihrerseits die Vortriebsgeschwindigkeit der Arbeitsmaschine 10 in einer Weise, dass selbsttätig eine gewünschte, konstante Erntegutaufnahmerate des Arbeitsgeräts 12 erreicht wird.

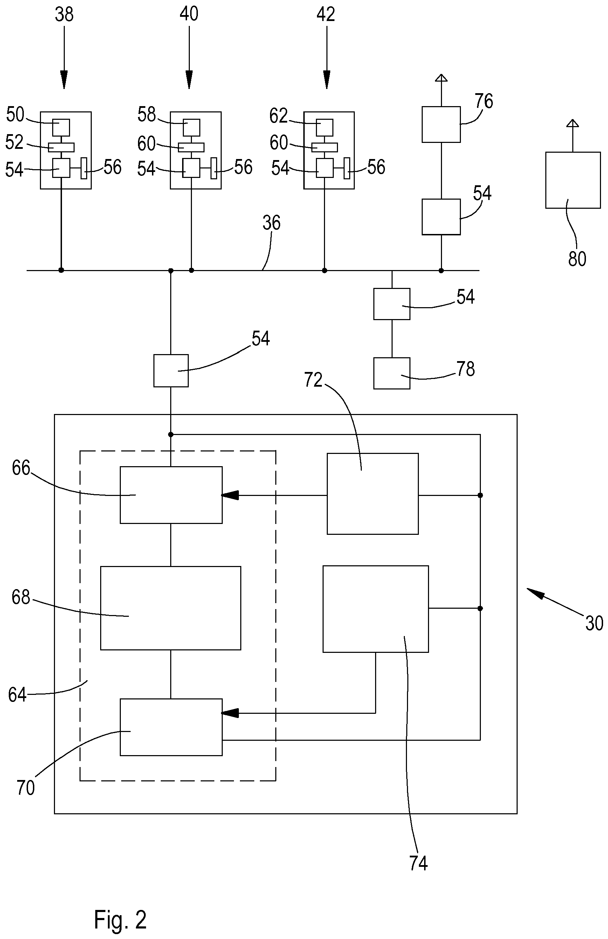

Die Figur 2 zeigt das Datenübertragungsnetzwerk 36, die Sensoranordnungen 38 bis 42 und die Steuereinheit 30 in einer schematischen Darstellung.

Die erste Sensoranordnung 38 umfasst einen Bildaufnehmer 50, das Bildverarbeitungssystem 52, eine Netzwerkschnittstelle 54 und einen Speicher 56. Der Bildaufnehmer 50 liefert Bilddaten, aus denen das Bildverarbeitungssystem 52 die Querschnittsfläche des Schwads ableitet und über die Netzwerkschnittstelle 54 und das Datenübertragungsnetzwerk 36 an die Steuereinheit 30 übersendet. Im Speicher 56 sind Formatierungsdaten abgelegt, die folgende Informationen beinhalten: (a) eine Identifikationsnummer der ersten Sensoranordnung 38, (b) ein Hinweis, dass die erste Sensoranordnung 38 die Querschnittsfläche des Schwads vor dem Arbeitsfahrzeug 10 erfasst, (c) die Maßeinheit der Querschnittsfläche (z. B. cm²), (d) Angaben, wie die Informationen der ersten Sensoranordnung 38 in den Daten kodiert sind, (e) Angaben, an welcher Stelle, d. h. wie weit vor der ersten Sensoranordnung 38, die Querschnittsfläche evaluiert wird, und (f) Angaben zur Genauigkeit der erfassten Querschnittsfläche.

Die zweite Sensoranordnung 40 umfasst einen Dehnungsmessstreifen 58, einen Analog/DigitalWandler 60, eine Netzwerkschnittstelle 54 und einen Speicher 56. Der Dehnungsmessstreifen 58 liefert einen elektrischen Wert (Spannung, Strom oder Widerstand), den der Analog/DigitalWandler 60 digitalisiert und über die Netzwerkschnittstelle 54 und das Datenübertragungsnetzwerk 36 an die Steuereinheit 30 übersendet. Im Speicher 56 sind Formatierungsdaten abgelegt, die folgende Informationen beinhalten: (a) eine Identifikationsnummer der zweiten Sensoranordnung 40, (b) ein Hinweis, dass die zweite Sensoranordnung 40 ein Drehmoment eines Rotors 44 des Arbeitsgeräts 12 erfasst, (c) die Maßeinheit des Drehmoments, (d) Angaben, wie die Informationen der zweiten Sensoranordnung 40 in den Daten kodiert sind, (e) der Zusammenhang zwischen dem Drehmoment und der Zuführrate (kg/s) des Ernteguts in das Arbeitsgerät 12, und (f) Angaben zur Genauigkeit des erfassten Drehmoments.

Die dritte Sensoranordnung 42 umfasst einen Dehnungsmessstreifen 62, einen Analog/DigitalWandler 60, eine Netzwerkschnittstelle 54 und einen Speicher 56. Der Dehnungsmessstreifen 62 liefert einen elektrischen Wert (Spannung, Strom oder Widerstand), den der Analog/DigitalWandler 60 digitalisiert und über die Netzwerkschnittstelle 54 und das Datenübertragungsnetzwerk 36 an die Steuereinheit 30 übersendet. Im Speicher 56 sind Formatierungsdaten abgelegt, die folgende Informationen beinhalten: (a) eine Identifikationsnummer der dritten Sensoranordnung 42, (b) ein Hinweis, dass die dritte Sensoranordnung 42 das Drehmoment an der Zapfwelle 34 des Arbeitsgeräts 12 erfasst, (c) die Maßeinheit des Drehmoments, (d) Angaben, wie die Informationen der dritten Sensoranordnung 42 in den Daten kodiert sind, und (f) Angaben zur Genauigkeit des erfassten Drehmoments.

Die Steuereinheit 30 ist über eine Schnittstelle 54 mit dem Datenübertragungsnetzwerk 36 verbunden. Sie umfasst eine Prozessoreinheit 64, die ein Sensordatenformatierungsmodul 66, ein Fusionsmodul 68 und ein Klassifizierungsmodul 70 zur Klassifizierung der fusionierten Sensorwerte umfasst bzw. realisiert. Das Sensordatenfusionierungsmodul 66 ist mit einer Sensorwissensbasis 72 verbunden, während das Klassifizierungsmodul 70 mit einer Regelwissensbasis 74 verbunden ist. Die Sensorwissensbasis 72, die Regelwissensbasis 74 und das Klassifizierungsmodul 70 sind auch mit der Schnittstelle 54 verbunden. Eine weitere Schnittstelle 54 verbindet das Datenübertragungsnetzwerk 36 mit einer Sende- und Empfangseinrichtung 76, mit der über Radiowellen Daten an beabstandete Arbeitsmaschinen und/oder beabstandete Server gesendet und von ihnen empfangen werden können.

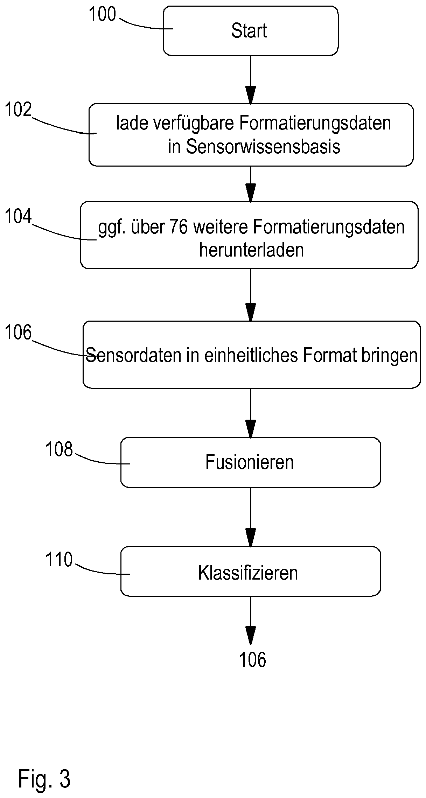

Das Flussdiagramm der Figur 3 gibt die Arbeitsweise der Steuereinheit 30 im Betrieb wieder. Nach dem Start im Schritt 100 (bzw. dem Anschließen eines neuen Arbeitsgeräts 12 am Datenübertragungsnetzwerk 36) werden im Schritt 102 zunächst alle verfügbaren Formatierungsdaten anhand der Identifikationsnummern der Sensoranordnungen 38, 40, 42 aus den Speichern 56 der Sensoranordnungen 38, 40, 42 über das Datenübertragungsnetzwerk 36 in die Sensorwissensbasis 72 heruntergeladen.

Falls diese Formatierungsdaten nicht hinreichen, um die Messwerte aller drei Sensoranordnungen 38 bis 42 miteinander vergleichen und verschmelzen zu können, folgt der Schritt 104, in welchem über die Sende- und Empfangseinrichtung 76 weitere Formatierungsdaten heruntergeladen werden. Im vorliegenden Beispiel der Figuren 1 und 2 fehlt beispielsweise ein Zusammenhang zwischen dem Schwadquerschnitt und der zugehörigen Masse des Ernteguts, bezogen auf die Wegstrecke, um die Messwerte der Sensoranordnung 38 mit denen der Sensoranordnung 42 vergleichen zu können. Diese Formatierungsdaten können über die Sende- und Empfangseinrichtung 76 von einem beabstandeten Server 80 abgefragt werden, in dem derartige Formatierungsdaten basierend auf älteren Messwerten und/oder der Vorgeschichte des Felds, auf dem die Arbeitsmaschine sich gerade befindet, abgelegt sind. Weiterhin wird, um die Daten der Sensoranordnungen 38 und 42 vergleichen zu können, noch eine Information über die aktuelle Vortriebsgeschwindigkeit der Arbeitsmaschine 10 benötigt, die in der Regel im Datenübertragungsnetzwerk 36 verfügbar ist. Analog fehlt ein Zusammenhang zwischen dem von der Sensoranordnung 40 erfassten Drehmoment und dem Durchsatz des Arbeitsgeräts 12, um die Messwerte der Sensoranordnungen 40 und 42 vergleichen zu können. Diese Formatierungsdaten können über die Sende- und Empfangseinrichtung 76 entweder vom Server 80 oder von einer gleichartigen Steuereinrichtung 30 einer anderen Arbeitsmaschine mit einem gleichartigen oder ähnlichen Arbeitsgerät abgefragt werden, wo sie werksseitig abgespeichert sind oder im Verlaufe von Arbeitsvorgängen erlernt und abgespeichert wurden.

Nach dem Schritt 104 stehen in der Sensorwissensbasis 72 hinreichende Formatierungsdaten zur Verfügung, um im Schritt 106 jeweils aktuelle Messwerte aller Sensoranordnungen 38 bis 42 in ein einheitliches Format zu bringen. Im vorliegenden Beispiel können alle Sensorwerte basierend auf den Formatierungsdaten (und ggf. aktuellen Daten vom Datenübertragungsnetzwerk, die z. B. die Vortriebsgeschwindigkeit der Arbeitsmaschine 10 betreffen) in der Sensorwissensbasis 72 in einen Durchsatz (kg aufgenommene Erntegutmasse pro Zeiteinheit) umgerechnet werden. Der Schritt 106 findet im Sensordatenformatierungsmodul 66 statt.

Dann folgt der Schritt 108, in dem die Sensordaten im Fusionsmodul 68 fusioniert werden. Dabei können die jeweiligen Genauigkeiten der einzelnen Sensoranordnungen 38 bis 42 berücksichtigt und nicht plausible Daten ignoriert werden. Das Fusionsmodul 68 gibt neben dem fusionierten Sensorwert auch eine Genauigkeit dieses Sensorwerts aus.

Schließlich folgt der Schritt 110, in welchem die fusionierten Sensordaten im Klassifizierungsmodul 70 unter Zugriff auf die Regelwissensbasis 74 klassifiziert werden. Letztere kann ebenfalls über die Sende- und Empfangseinrichtung 76 von anderen Arbeitsmaschinen und/oder einem beabstandeten Server 80 mit Daten beaufschlagt werden. Das Klassifizierungsmodul 70 verwendet eine Fuzzy-Klassifizierung und die Regelwissensbasis 74 dient zur Bereitstellung des zugehörigen Regelwerks der Inferenz. Hierzu sei auf den eingangs erwähnten Artikel von Hoseinnezad et al. und die Offenbarung der EP 1 277 388 A1 verwiesen, dessen Offenbarungen durch Inbezugnahme mit in die vorliegenden Unterlagen aufgenommen werden. Im vorliegenden Beispiel kann das Regelwerk auf Eigenschaften des Ernteguts (z. B. Feuchtigkeit) und/oder durch geeignete Sensoren erfassten Eigenschaften des Ballens beruhen (z. B. die Ballenform).

Im vorliegenden Beispiel stellt das Klassifizierungsmodul 70 letztendlich eine auf dem aktuellen Durchsatz des Arbeitsgeräts 12 beruhende Steuergröße bereit, der von der Steuerung 30 (oder einer anderen Steuerung der Arbeitsmaschine 10) zur Ansteuerung eines über das Datenübertragungsnetzwerk 36 und eine Schnittstelle 54 kontrollierten Aktors 78 verwendet wird, der die Vortriebsgeschwindigkeit der Arbeitsmaschine 10 kontrolliert. Das Klassifizierungsmodul 70 könnte auch durch eine Regelung beliebiger Art ersetzt werden, z. B. einen PID-Regler. Auf den Schritt 110 folgt wieder der Schritt 106.

## Patentansprüche

1. System zur Kontrolle einer Arbeitsmaschine (10), umfassend:
eine Mehrzahl an Sensoranordnungen (38, 40, 42), die jeweils einen Ausgangswert bereitstellen,
eine Prozessoreinheit (64) und
ein Datenübertragungsnetzwerk (36), das die Sensoranordnungen (38, 40, 42) mit der Prozessoreinheit (64) verbindet, die betreibbar ist, die Ausgangswerte von den Sensoranordnungen (38, 40, 42) basierend auf den Sensoranordnungen (38, 40, 42) zugeordneten Formatierungsdaten in ein einheitliches Datenformat zu überführen und zu einem kombinierten Messwert zu verschmelzen,
wobei die Prozessoreinheit (64) betreibbar ist, die Formatierungsdaten über das Datenübertragungsnetzwerk (36) zu beziehen, wozu jeder Sensoranordnung (38, 40, 42) eine Identifikationsnummer zugeordnet ist, welche die Sensoranordnung (38, 40, 42) beim Initialisieren des Systems an die Prozessoreinheit (64) überträgt und die Prozessoreinheit (64) betreibbar ist, die der Sensoranordnung (38, 40, 42) zugehörigen Formatierungsdaten anhand der Identifikationsnummer aus dem Datenübertragungsnetzwerk (36) abzufragen,
das Datenübertragungsnetzwerk (36) sich über eine Arbeitsmaschine (10) und ggf. ein daran angebrachtes Arbeitsgerät (12) erstreckt und lokal auf der Arbeitsmaschine verfügbare Formatierungsdaten in mit dem Datenübertragungsnetzwerk (36) verbundenen Speichereinheiten und/oder in Speichern (56) der Sensoranordnungen (38, 40, 42) bereitgestellt werden,
das Datenübertragungsnetzwerk (36) sich zusätzlich über eine drahtlose Kommunikationsstrecke bis zu einem Datenübertragungsnetzwerk einer anderen Arbeitsmaschine, das Formatierungsdaten in einer mit dem Datenübertragungsnetzwerk verbundenen Speichereinheit und/oder einer Sensoranordnung bereitstellt und/oder zu einem stationären Rechner (80), von dem Formatierungsdaten vorgehalten werden, erstreckt,
und die Prozessoreinheit (64) betreibbar ist, die Formatierungsdaten für die Sensoranordnungen (38, 40, 42) über die drahtlose Kommunikationsstrecke herunterzuladen, falls die lokal auf der Arbeitsmaschine verfügbaren Formatierungsdaten nicht hinreichen, um die Messwerte aller Sensoranordnungen (38, 40, 42) miteinander vergleichen und verschmelzen zu können.

2. System nach Anspruch 1, wobei die Formatierungsdaten folgende Daten umfassen:
die durch die Sensoranordnung (38, 40, 42) erfassten physikalischen Größe oder Größen und/oder
die Maßeinheit, einen Skalierungsfaktor und einen Nullversatz des Messwertes und/oder
die Abhängigkeit des Messwerts von intrinsischen Parametern.

3. System nach Anspruch 2, wobei die Formatierungsdaten Informationen hinsichtlich einer Qualitätsmetrik und/oder eines Messbereichs der Sensoranordnung (38, 40, 42) umfassen.

4. System nach einem der vorhergehenden Ansprüche, wobei die Prozessoreinrichtung (64) betreibbar ist, basierend auf dem kombinierten Messwert einen Aktor (78) der Arbeitsmaschine (10) und/oder eines an der Arbeitsmaschine (10) angebrachten Arbeitsgeräts (12) anzusteuern.

5. System nach einem der vorhergehenden Ansprüche, wobei die Formatierungsdaten werksseitig abgespeichert oder im Betrieb der Arbeitsmaschine erlernt werden.

6. Arbeitsmaschine (10) mit einem System nach einem der vorhergehenden Ansprüche.

7. Verfahren zur Kontrolle einer Arbeitsmaschine (10), umfassend folgende Schritte:
Bereitstellen von Ausgangswerten durch eine Mehrzahl an Sensoranordnungen (38, 40, 42),
Übertragen der Ausgangswerte über ein Datenübertragungsnetzwerk (36) an eine Prozessoreinheit (64),
Überführen der Ausgangswerte von mehreren Sensoranordnungen (38, 40, 42) basierend auf den Sensoranordnungen (38, 40, 42) zugeordneten Formatierungsdaten in ein einheitliches Datenformat und Verschmelzen der in ein einheitliches Datenformat überführten Ausgangswerte zu einem kombinierten Messwert,
wobei die Formatierungsdaten über das Datenübertragungsnetzwerk (36) an die Prozessoreinheit (64) übertragen werden, wozu jeder Sensoranordnung (38, 40, 42) eine Identifikationsnummer zugeordnet ist, welche der Sensoranordnung (38, 40, 42) beim Initialisieren des Systems an die Prozessoreinheit (64) überträgt und die Prozessoreinheit (64) die der Sensoranordnung (38, 40, 42) zugehörigen Formatierungsdaten anhand der Identifikationsnummer aus dem Datenübertragungsnetzwerk (36) abfragt,
das Datenübertragungsnetzwerk (36) sich über eine Arbeitsmaschine (10) und ggf. ein daran angebrachtes Arbeitsgerät (12) erstreckt und lokal auf der Arbeitsmaschine verfügbare Formatierungsdaten in mit dem Datenübertragungsnetzwerk (36) verbundenen Speichereinheiten und/oder in Speichern (56) der Sensoranordnungen (38, 40, 42) bereitgestellt werden,
das Datenübertragungsnetzwerk (36) sich zusätzlich über eine drahtlose Kommunikationsstrecke bis zu einem Datenübertragungsnetzwerk einer anderen Arbeitsmaschine, das Formatierungsdaten in einer mit dem Datenübertragungsnetzwerk verbundenen Speichereinheit und/oder einer Sensoranordnung bereitstellt und/oder zu einem stationären Rechner (80), von dem die Formatierungsdaten vorgehalten werden, erstreckt,
und die Prozessoreinheit (64) die Formatierungsdaten für die Sensoranordnungen (38, 40, 42) über die drahtlose Kommunikationsstrecke herunterlädt, falls die lokal auf der Arbeitsmaschine verfügbaren Formatierungsdaten nicht hinreichen, um die Messwerte aller Sensoranordnungen (38, 40, 42) miteinander vergleichen und verschmelzen zu können.

## Claims

1. System for controlling a work machine (10), comprising:
a plurality of sensor arrangements (38, 40, 42) which each provide an output value,
a processor unit (64), and
a data transmission network (36) which connects the sensor arrangements (38, 40, 42) to the processor unit (64) which can be operated to convert the output values from the sensor arrangements (38, 40, 42) into a standard data format on the basis of formatting data assigned to the sensor arrangements (38, 40, 42) and to merge said output values to form a combined measured value,
the processor unit (64) being able to be operated to obtain the formatting data via the data transmission network (36), for which purpose each sensor arrangement (38, 40, 42) is assigned an identification number which is transmitted by the sensor arrangement (38, 40, 42) to the processor unit (64) during initialization of the system, and the processor unit (64) being able to be operated to retrieve the formatting data associated with the sensor arrangement (38, 40, 42) from the data transmission network (36) on the basis of the identification number,
the data transmission network (36) extending via a work machine (10) and possibly a working device (12) fitted to the latter, and formatting data available locally on the work machine being provided in memory units and/or in memories (56) of the sensor arrangements (38, 40, 42) which are connected to the data transmission network (36),
the data transmission network (36) additionally extending, via a wireless communication path, to a data transmission network of another work machine, which provides formatting data in a memory unit and/or a sensor arrangement connected to the data transmission network, and/or to a stationary computer (80) which holds formatting data,
and the processor unit (64) being able to be operated to download the formatting data for the sensor arrangements (38, 40, 42) via the wireless communication path if the formatting data available locally on the work machine do not suffice to be able to compare and merge the measured values from all sensor arrangements (38, 40, 42) with one another.

2. System according to Claim 1, the formatting data comprising the following data:
the physical variable(s) recorded by the sensor arrangement (38, 40, 42), and/or
the measurement unit, a scaling factor and a zero offset of the measured value, and/or
the dependence of the measured value on intrinsic parameters.

3. System according to Claim 2, the formatting data comprising information relating to quality metrics and/or a measurement range of the sensor arrangement (38, 40, 42).

4. System according to one of the preceding claims, the processor device (64) being able to be operated to control an actuator (78) of the work machine (10) and/or of a working device (12) fitted to the work machine (10) on the basis of the combined measured value.

5. System according to one of the preceding claims, the formatting data being stored at the factory or being learnt during operation of the work machine.

6. Work machine (10) having a system according to one of the preceding claims.

7. Method for controlling a work machine (10), comprising the following steps of:
providing output values by means of a plurality of sensor arrangements (38, 40, 42),
transmitting the output values to a processor unit (64) via a data transmission network (36),
converting the output values from a plurality of sensor arrangements (38, 40, 42) into a standard data format on the basis of formatting data assigned to the sensor arrangements (38, 40, 42) and merging the output values converted into a standard data format to form a combined measured value,
the formatting data being transmitted to the processor unit (64) via the data transmission network (36), for which purpose each sensor arrangement (38, 40, 42) is assigned an identification number which is transmitted by the sensor arrangement (38, 40, 42) to the processor unit (64) during initialization of the system, and the processor unit (64) retrieving the formatting data associated with the sensor arrangement (38, 40, 42) from the data transmission network (36) on the basis of the identification number,
the data transmission network (36) extending via a work machine (10) and possibly a working device (12) fitted to the latter, and formatting data available locally on the work machine being provided in memory units and/or memories (56) of the sensor arrangements (38, 40, 42) which are connected to the data transmission network (36),
the data transmission network (36) additionally extending, via a wireless communication path, to a data transmission network of another work machine, which provides formatting data in a memory unit and/or a sensor arrangement connected to the data transmission network, and/or to a stationary computer (80) which holds the formatting data,
and the processor unit (64) downloading the formatting data for the sensor arrangements (38, 40, 42) via the wireless communication path if the formatting data available locally on the work machine do not suffice to be able to compare and merge the measured values from all sensor arrangements (38, 40, 42) with one another.

## Revendications

1. Système de contrôle d'une machine de travail (10), comprenant :
une pluralité de dispositifs détecteurs (38, 40, 42) qui fournissent respectivement une valeur initiale,
une unité à processeur (64), et
un réseau de transmission de données (36) qui relie les dispositifs détecteurs (38, 40, 42) à l'unité à processeur (64), laquelle peut être mise en fonctionnement pour convertir les valeurs initiales provenant des dispositifs détecteurs (38, 40, 42), sur la base de données de formatage associées aux dispositifs détecteurs (38, 40, 42), en un format de données uniforme et pour les fusionner en une valeur de mesure combinée,
dans lequel l'unité à processeur (64) peut être mise en fonctionnement pour prendre en compte les données de format sur le réseau de transmission de données (36), de telle sorte qu'un numéro d'identification soit associé à chaque dispositif détecteur (38, 40, 42), lequel numéro d'identification transmet le dispositif détecteur (38, 40, 42) lors de l'initialisation du système à l'unité à processeur (64) et l'unité à processeur (64) peut être mise en fonctionnement pour demander au réseau de transmission de données (36) des données de formatage associées au dispositif détecteur (38, 40, 42) sur la base du numéro d'identification,
le réseau de transmission de données (36) s'étend à travers une machine de travail (10) et le cas échéant, un appareil de travail (12) monté sur celle-ci et des données de formatage disponibles localement sur la machine de travail sont fournies dans des unités de mémorisation et/ou des mémoires (56) des dispositifs détecteurs (38, 40, 42), qui sont reliées au réseau de transmission de données (36),
le réseau de transmission de données (36) s'étend à travers un trajet de communication sans fil jusqu'à un réseau de transmission de données d'une autre machine de travail qui fournit les données de formatage dans une unité de stockage et/ou un dispositif capteur relié au réseau de transmission de données et/ou à un calculateur stationnaire (80) qui conserve les données de formatage,
et l'unité à processeur (64) peut être mise en fonctionnement pour télécharger les données de formatage destinées aux dispositifs détecteurs (38, 40, 42) par l'intermédiaire du trajet de communication sans fil dans le cas où les données de formatage disponibles localement sur la machine de travail ne sont pas suffisantes pour pouvoir comparer les unes aux autres et fusionner les valeurs de mesure de tous les dispositifs détecteurs (38, 40, 42).

2. Système selon la revendication 1, dans lequel les données de formatage comprennent les données suivantes :
la grandeur ou les grandeurs physique(s) détectée(s) par le dispositif détecteur (38, 40, 42) et/ou
l'unité de mesure, un facteur d'échelle et le décalage du zéro de la valeur de mesure et/ou la dépendance de la valeur de mesure par rapport à des paramètres intrinsèques.

3. Système selon la revendication 2, dans lequel les données de formatage comprennent des informations concernant une métrique de qualité et/ou une plage de mesure du dispositif détecteur (38, 40, 42).

4. Système selon l'une quelconque des revendications précédentes, dans lequel le dispositif à processeur (64) peut être mis en fonctionnement pour commander, sur la base de la valeur de mesure combinée, un actionneur (78) de la machine de travail (10) et/ou un appareil de travail (12) monté sur la machine de travail (10).

5. Système selon l'une quelconque des revendications précédentes, dans lequel les données de formatage sont stockées en usine ou sont apprises lors du fonctionnement de la machine de travail.

6. Machine de travail (10) comportant un système selon l'une quelconque des revendications précédentes.

7. Procédé de contrôle d'une machine de travail (10), comprenant les étapes consistant à :
fournir des valeurs initiales au moyen d'une pluralité de dispositifs détecteurs (38, 40, 42), transmettre les valeurs initiales par l'intermédiaire d'un réseau de transmission de données (36) à une unité à processeur (64),
convertir les valeurs initiales de plusieurs dispositifs détecteurs (38, 40, 42) sur la base de données de formatage associées aux dispositifs détecteurs (38, 40, 42) en un format de données uniforme et fusionner les valeurs initiales converties en un format de données uniforme en une valeur de mesure combinée,
dans lequel les données de formatage sont transmises par l'intermédiaire du réseau de transmission de données (36) à l'unité à processeur (64), de telle sorte qu'un numéro d'identification soit associé à chaque dispositif détecteur (38, 40, 42), lequel numéro d'identification transmet le dispositif détecteur (38, 40, 42) lors de l'initialisation du système à l'unité à processeur (64) et l'unité à processeur (64) demande au réseau de transmission de données (36) les données de formatage associées au dispositif détecteur (38, 40, 42) sur la base du numéro d'identification,
le réseau de transmission de données (36) s'étend à travers une machine de travail (10) et le cas échéant, un appareil de travail (12) monté sur celle-ci et des données de formatage disponibles localement sur la machine de travail sont fournies dans des unités à mémoire et/ou des mémoires (56) reliées au réseau de transmission de données (36) des dispositifs détecteurs (38, 40, 42),
le réseau de transmission de données (36) s'étend en outre à travers un trajet de communication sans fil jusqu'à un réseau de transmission de données d'une autre machine de travail, qui fournit des données de formatage dans une unité à mémoire et/ou un dispositif détecteur relié au réseau de transmission de données et/ou à un calculateur stationnaire (80) qui conserve les données de formatage,
et l'unité à processeur (64) télécharge les données de formatage destinées aux dispositifs détecteurs (38, 40, 42) par l'intermédiaire du trajet de communication sans fil dans le cas où les données de formatage disponibles localement sur la machine de travail ne sont pas suffisantes pour pouvoir comparer les unes aux autres et fusionner les valeurs de mesure de tous les dispositifs détecteurs (38, 40, 42).
